# EUROPÄISCHE PATENTSCHRIFT

(11) **EP 1 926 631 B1**
(45) Veröffentlichungstag und Bekanntmachung des Hinweises auf die Patenterteilung: **17.12.2008**
(21) Anmeldenummer: 06805283.6
(22) Anmeldetag: 12.09.2006
(51) Int. Cl.: B60R 1/076

(54) **VERSTELLBARER SPIEGEL**
ADJUSTABLE MIRROR
MIROIR REGLABLE

(30) Priorität: 12.09.2005 DE 102005043600
(43) Veröffentlichungstag der Anmeldung: 04.06.2008
(73) Patentinhaber: Visiocorp Patents S.à.r.l., 1653 Luxembourg (LU)
(72) Erfinder: EKENHORST, Derk, 49492 Westerkappeln (DE)
(74) Vertreter: Rausch, Gabriele
(86) Internationale Anmeldenummer: PCT/DE2006/001620
(87) Internationale Veröffentlichungsnummer: WO 2007/031069

(56) Entgegenhaltungen:
- EP-A1- 0 173 113
- EP-A1- 1 008 488
- DE-A1- 10 121 400
- GB-A- 2 374 578
- US-A1- 2005 168 855

## Beschreibung

Die Erfindung betrifft einen verstellbaren Spiegel für Kraftfahrzeuge mit einem Gelenk, das einen Spiegelträger um eine Drehachse klappbar mit einem Spiegelfuß verbindet. Eine solche Ausgestaltung ist insbesondere für Außenspiegel in Pkw geeignet.

Aus dem Stand der Technik sind Gelenkverbindungen zwischen einem Spiegelfuß und einem Spiegelträger bekannt, bei dem um die Drehachse des Spiegelträgers herum eine in Axialrichtung wirksame Metallfeder angeordnet ist. Diese Metallfeder drückt den Spiegelträger in Richtung auf den Spiegelfuß, wobei zwischen dem Spiegelfuß und dem Spiegelträger eine Mehrfachverzahnung ausgebildet ist, die durch die vorgespannte Metallfeder unter Spannung steht. Die Feder und die Verzahnung haben die Aufgabe, den Außenspiegel in vorgegebenen Positionen zu fixieren; dies sind die Normalposition, eine Parkposition und eine Notposition. Über die Feder und die ausgeübte Vorspannung wird eine Haltekraft bereitgestellt, die eine Verschwenkbewegung des Spiegelträgers um den Spiegelfuß bzw. um die Drehachse bis zu einer Auslösekraft verhindert.

Einen solchen Spiegel nach dem Stand der Technik gibt die EP1 008 488A an.

Nachteilig an dieser Lösung sind der vielteilige Aufbau des Spiegels und die schwierige Montage mit der Notwendigkeit, die Druckfeder vorzuspannen.

Aufgabe der vorliegenden Erfindung ist es, einen verstellbaren Spiegel bereitzustellen, der leichter ausgebildet und einfacher zu montieren ist.

Erfindungsgemäß wird diese Aufgabe mit den Merkmalen des Anspruches 1 gelöst. Vorteilhafte Ausgestaltungen und Weiterbildungen der Erfindung sind in den Unteransprüchen beschrieben. Ein erfindungsgemäßer Spiegel für Kraftfahrzeuge mit einem Gelenk, das einen Spiegelträger um eine Drehachse klappbar mit einem Spiegelfuß verbindet, sieht vor, dass zwischen dem Spiegelfuß und dem Spiegelträger ein Elastomerelement angeordnet ist, das formschlüssig oder stoffschlüssig an dem Spiegelträger und/oder dem Spiegelfuß festgelegt ist. Der Spiegelträger wird dabei in einer ersten Stellung gehalten. An dem Spiegelträger und/oder an dem Spiegelfuß ist zumindest ein Kompressionselement angeordnet, das bei einer Verlagerung des Spiegelträgers aus der ersten Stellung in eine zweite Stellung das Elastomerelement komprimiert. Dadurch ist es möglich, die Teileanzahl für einen montierten Außenspiegel zu reduzieren und den Montagevorgang selbst zu vereinfachen, da die Bauteilanzahl verringert ist und die Bauteile selbst leichter ausgeführt werden können.

Eine Weiterbildung der Erfindung sieht vor, dass die Kompressionselemente eine radial zu der Drehachse wirksame bzw. gerichtete Komponente aufweisen, also als Vorsprünge an dem Spiegelfuß und/oder dem Spiegelträger ausgebildet sind. Das Elastomerelement bzw. die Elastomerelemente sind dann in Ausbuchtungen bzw. zwischen zwei Vorsprüngen gehalten, so dass bei einer Verlagerung des Spiegelträgers relativ zu dem Spiegelfuß um die Drehachse eine Relativbewegung des Elastomerelementes entweder zu dem Spiegelfuß oder zu dem Spiegelträger erfolgt. Der Spiegelfuß dreht sich dann in dem Elastomerelement oder der Spiegelträger dreht sich um das Elastomerelement. Durch die radial ausgerichteten Vorsprünge wird das Elastomerelement radial komprimiert und wirkt so einer Verstellung um die Drehachse mit einer festlegbaren Kraft entgegen.

Für eine formschlüssige Festlegung und Ausbildung von radial wirksamen Vorsprüngen ist es vorgesehen, dass der Spiegelfuß und/oder der Spiegelträger einen unrunden oder polygonen Querschnitt im Bereich der Lagerung des Elastomerelementes aufweisen. Beispielsweise kann der Spiegelfuß von dem Elastomerelement umgeben sein, wobei der Querschnitt des Spiegelfußes im Lagerbereich des Elastomerelementes als ein regelmäßiges Vieleck, ggf. mit gerundeten Ecken, ausgebildet sein kann. Die Anzahl der Ecken richtet sich dabei nach dem gewünschten Einstellwinkel. Sind die Einstellwinkel in Fahrtrichtung oder entgegen Fahrtrichtung unterschiedlich groß, können auch unregelmäßige Querschnittskonturen vorgesehen sein. Eine mögliche Ausgestaltung sieht eine sechseckige Querschnittskontur des Spiegelfußes vor.

Eine mögliche Ausgestaltung zur Anordnung des Elastomerelementes in dem Spiegelträger sieht vor, dass das Elastomerelement formschlüssig in den Spiegelträger eingelegt ist, insbesondere von dem Spiegelträger umgeben ist, wobei der Spiegelträger eine Vielzahnkontur aufweist, in der das Elastomerelement formschlüssig eingesetzt ist.

Damit der Spiegelfuß oder der Spiegelträger nicht unmittelbar auf dem Elastomerelement abgleiten muss, da durch die elastische Verformbarkeit des Elastomerelementes die Gleitfähigkeit auf Oberflächen verringert ist, ist in einer Weiterbildung der Erfindung vorgesehen, dass zwischen dem Spiegelfuß oder dem Spiegelträger und dem Elastomerelement ein Kopplungselement angeordnet ist, das auf der Außenkontur des Spiegelfußes oder des Spiegelträgers entlanggleitet und eine radiale Auslenkung erfährt, um das Elastomerelement zu komprimieren. Das Elastomerelement ist bevorzugt aus einem elastisch verformbaren Kunststoff oder Gummiwerkstoff hergestellt, beispielsweise aus einem elastisch verformbaren Kunststoffschaum oder einem vulkanisierten Gummielement. Das Kopplungselement kann in dem Elastomerelement integriert sein, beispielsweise angeformt oder als eine Komponente in einem 2K-Formverfahren zusammen mit dem Elastomerelement ausgebildet werden.

Eine besonders vorteilhafte Ausgestaltung der Erfindung sieht vor, dass das Elastomerelement an dem Spiegelträger oder an dem Spiegelfuß angeformt ist, insbesondere als eine Komponente in einem 2K-Spritzgießverfahren mit dem Spiegelfuß oder mit dem Spiegelträger gefertigt wird, so dass eine Integration des Elastomerelementes in den Spiegelfuß oder Spiegelträger erfolgt. Dadurch ist es möglich, dass lediglich zwei Komponenten, nämlich der Spiegelfuß und der Spiegelträger, miteinander gefügt werden müssen, ohne dass eine weitere Komponente bei der Montage berücksichtigt werden muss.

Zur Schwingungsdämpfung des Spiegels bzw. Spiegelträgers ist es vorgesehen, dass das Elastomerelement unter einer Vorspannung an dem Spiegelfuß und/oder dem Spiegelträger festgelegt ist, wobei die Vorspannung in Umfangsrichtung wirkt. Die Vorspannung wird so eingestellt, dass eine bestimmte Schwingungsdämpfung erzielt wird, der Spiegelträger jedoch relativ zu dem Spiegelfuß sicher gehalten wird. Eine Vorspannung ist auch in radialer Richtung vorgesehen.

Nachfolgend werden zwei Ausführungsbeispiele der Erfindung anhand der beigefügten Figuren näher erläutert. Es zeigen:
- Figur 1: einen Spiegelfuß in perspektivischer Ansicht;
- Figur 2: einen montierten Spiegelträger an einem Spiegelfuß gemäß Figur 1 in perspektivischer Teilschnittansicht;
- Figur 3: einen montierten Spiegelträger an dem Spiegelfuß in Draufsicht in Normalstellung;
- Figur 4: einen Spiegelträger gemäß Figur 3 in einer verdrehten Stellung;
- Figur 5: eine perspektivische Teilschnittansicht einer zweiten Ausführungsform; sowie
- Figur 6: eine Draufsicht auf einen Spiegel gemäß Figur 5.

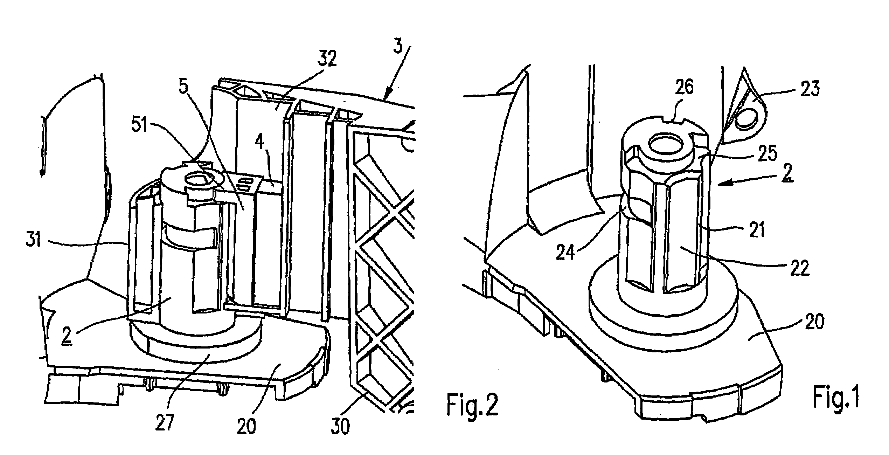

In der Figur 1 ist ein Spiegelfuß 2 gezeigt, der an einer Basis 20 ausgebildet ist, an der ein Befestigungsbereich 23 zur Befestigung des Spiegelfußes 2 an einem Kraftfahrzeug, insbesondere Pkw, ausgebildet ist. Der Befestigungsbereich 23, die Basis 20 und der Spiegelfuß 2 sind bevorzugt als einteiliges Kunststoffbauteil ausgebildet. Der Spiegelfuß 2 erstreckt sich im Wesentlichen senkrecht zu der im Wesentlichen waagerecht ausgerichteten Basis 20 und bildet eine Drehachse aus, die in Axialrichtung Ausnehmungen 22 bzw. Vorsprünge 21 aufweist. Vorliegend sind diese Ausnehmungen 22 bzw. Vorsprünge 21 dem Befestigungsbereich 23 gegenüberliegend ausgebildet, sie können jedoch auch symmetrisch an dem Spiegelfuß 2 ausgebildet sein. Auf der dem Befestigungsbereich 23 zugewandten Seite ist eine Axialsperre 24 in Gestalt einer Nut ausgebildet, durch die verhindert wird, dass ein an dem Spiegelfuß 2 gelagerter Spiegelträger 3, wie er in der Figur 2 gezeigt ist, sich in axialer Richtung von dem Spiegelfuß 2 lösen kann. Dazu ist an dem Spiegelträger 3 im Bereich der Axialsperre 24 ein nicht dargestellter Vorsprung in einer Spiegelfußaufnahme 31 ausgebildet, die durch eine sich axial erstreckende Einführnut 26 in Eingriff mit der Axialsperre 24 gebracht wird.

In der Figur 2 ist in einer perspektivischen Teilschnittansicht ein Spiegelträger 3 gezeigt, der an einem Spiegelfuß 2 montiert ist. Der Spiegelträger 3 weist neben einer Spiegelglasaufnahme 30 die Spiegelfußaufnahme 31 auf, die den Spiegelfuß 2 in montiertem Zustand umschließt. Die Spiegelfußaufnahme 31 liegt auf einem Absatz 27 auf, der von der Basis 20 ausgeht. Der Spiegelträger 3 kann grundsätzlich um den Spiegelfuß 2 herum verschwenkt werden. Um den Spiegelträger 3 in einer gewünschten Stellung zu halten, ist in einer Nut 32, die in dem Spiegelträger 3 ausgebildet ist, ein Elastomerelement 4 eingeführt, das über ein daran befestigtes, bevorzugt angeklebtes oder einstückig damit ausgebildetes Kopplungsteil 50 mit den Ausbuchtungen 22 formschlüssig in Eingriff tritt. Somit ist eine formschlüssige, elastische Kopplung zwischen dem Spiegelfuß 2 und dem Spiegelträger 3 durch das Elastomerelement 4, in dem Ausführungsbeispiel gemäß Figur 2 in Verbindung mit dem Kopplungsteil 5, gewährleistet. Das Elastomerelement 4 ist im montierten Zustand leicht komprimiert, so dass eine in Radialrichtung wirksame Kraft zwischen dem Spiegelfuß 2 und dem Spiegelträger 3 ausgeübt wird. Dadurch wird der Spiegelträger 3 in der einmal eingestellten Position gehalten, die durch die Anordnung der Ausnehmungen 22 oder Einbuchtungen festgelegt ist.

In dem dargestellten Ausführungsbeispiel sind in dem Spiegelfuß 2 drei Ausnehmungen 22 vorgesehen, in denen das Kopplungsteil 5 einrasten kann. Die mittlere Ausnehmung 22 legt die Normalstellung fest, während die Ausnehmung entgegensetzt dem Uhrzeigersinn eine Notstellung und die in Uhrzeigersinn eine Parkstellung mit angelegtem Spiegelträger 3 definiert. Die Ausnehmungen 22 können gleichmäßig voneinander beabstandet sein, alternativ ist eine Anordnung der Ausnehmungen 22 dergestalt vorgesehen, dass sie ungleichmäßig voneinander beabstandet sind, so dass eine unterschiedlich weite Verschwenkung des Spiegelträgers 3 aus der Normalstellung ermöglicht wird.

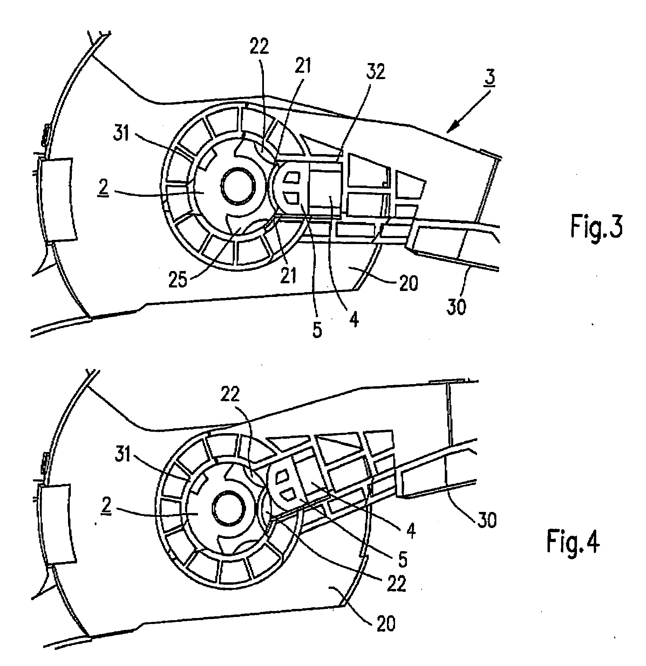

In der Figur 3 ist in Draufsicht ein Spiegelträger 3 in Normalstellung gezeigt, der an dem Spiegelfuß 2 verschwenkbar gelagert ist. In der Figur 3 sind die drei Ausnehmungen 22 bzw. zwei Vorsprünge 21 zu erkennen. Die Kontur der Ausnehmungen 22 ist leicht gerundet.

Der formstabile Spiegelträger 3, der ebenfalls einstückig als Spritzgussteil ausgebildet ist, weist eine den Spiegelfuß 2 umgebene Spiegelfußaufnahme 31 auf, die im Wesentlichen ringförmig ausgebildet ist und an der über einen Ausleger der Spiegelglasaufnehmer 30 angeformt ist. Das in Radialrichtung leicht komprimierte Elastomerelement 4 liegt über das Kopplungsteil 5 an dem Spiegelfuß 2 an und ist in der Nut 32 des Spiegelträgers 3 formschlüssig festgelegt. Ergänzend kann das Elastomerelement 4 in den Spiegelträger 3 eingeklebt oder gemeinsam im 2K-Spritzgussverfahren ausgeformt sein.

Das Kopplungsteil 5 weist eine zu der Ausbuchtung 22 korrespondierende Kontur auf. Durch die gerundete Ausgestaltung wird der Spiegelträger 3 in der jeweiligen Stellung aufgrund der radial wirksamen Vorspannkraft gehalten. Im stirnseitigen Bereich des Spiegelfußes 2 ist ein Auflager 25 gebildet, auf dem ein Absatz 51 des Kopplungsteiles 5 gelagert ist und bei einem Verschwenken des Spiegelträgers 3 darauf entlanggleitet.

Um von der in der Figur 3 dargestellten Normalstellung in beispielsweise eine Notstellung zu gelangen, muss eine Verschwenkung des Spiegelträgers 3 entgegen dem Uhrzeigersinn um den Spiegelfuß 2 durchgeführt werden. Aufgrund der Kontur der Ausnehmung 22 und der darüber hinaus stehenden Vorsprünge 21 gleitet das Kopplungsteil 5 auf der Außenkontur des Spiegelfußes 2 entlang. Neben einer in Umfangsrichtung wirkenden Kraftkomponente, muss eine radial wirkende Kraftkomponente aufgebracht werden, um das Elastomerelement 4 zu komprimieren. In der Figur 4 ist es in einer fast maximal komprimierten Stellung dargestellt, in der eine nahezu maximale radial wirkende Kraftkomponente auf den Spiegelfuß 2 bzw. den Vorsprung 21, auf dem das Kopplungsteil 5 abgleitet, wirkt. Wird nun der Spiegelträger 3 weiter entgegen dem Uhrzeigersinn verschwenkt, beispielsweise weil ein Fahrzeug oder andere Verkehrsteilnehmer zu nah an dem Fahrzeug vorbeifährt und mit dem Außenspiegel kollidiert, wird das Kopplungsteil 5 über den Vorsprung 21 hinweg bewegt, schnappt in die obere Ausnehmung 22 ein und hält den Spiegelträger 3 in der Notstellung. Entsprechend findet eine Verlagerung zurück in die Normalstellung oder in eine angelegte Stellung an die Außenkontur des Fahrzeuges in entgegengesetzter Richtung statt.

Statt einer zweiteiligen Ausgestaltung des Elastomerelementes 4 in Kombination mit dem Kopplungsteil 5 ist es vorgesehen, das Elastomerelement 4 einstückig entweder an dem Spiegelträger 3 oder dem Spiegelfuß 2 auszubilden. Auch ist es möglich, dass ein Abgleiten des Elastomerelementes 4 nicht auf dem Spiegelfuß 2, sondern auf dem Spiegelträger 3 erfolgt.

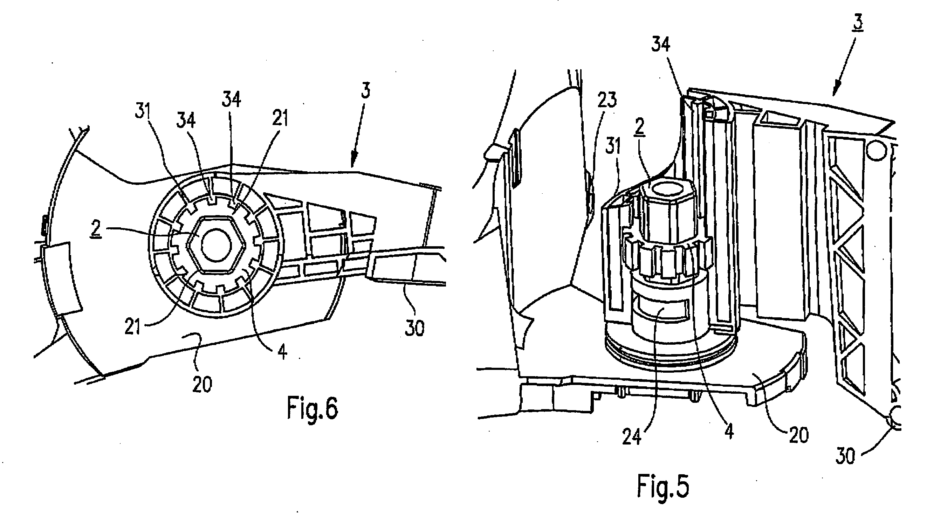

Eine alternative Ausgestaltung der Erfindung ist in der Figur 5 gezeigt, bei der statt eines blockförmigen Elastomerelementes 4 ein sternförmiges Elastomerelement 4 vorgesehen ist. An der Außenkontur, die rund ist, sind nutenförmige Ausnehmungen ausgebildet, die in korrespondierend ausgeformte Formschlusselemente 34 in dem Spiegelträger 3 in der Innenkontur der Spiegelfußaufnahme 31 eingreifen. Die Innenkontur des Elastomerelementes 4 ist sechseckig ausgebildet und korrespondiert zu der Außenkontur des Spiegelfußes 2. Das Elastomerelement 4 ist unter Spannung sowohl in Axialals auch in Umfangsrichtung eingepasst, bevorzugt an dem Spiegelträger 3 angeformt und bewirkt durch diese Vorspannung neben einer Festlegung der dargestellten Normalposition auch eine Dämpfung gegenüber Schwingungen, so dass der Spiegelträger 3 gedämpft und ruhig an dem Spiegelfuß 2 gelagert ist.

Um eine Verstellung des Spiegelträgers 3 in oder entgegen dem Uhrzeigersinn zu bewirken, wird durch Aufbringen einer Kraft auf den Spiegelträger 3 ein Moment erzeugt. Die Kanten des Spiegelfußes 2 dienen als Vorsprünge 21, über die die Bereiche des Elastomerelementes 4 mit einer erhöhten Materialstärke hinübergleiten müssen, so dass ein korrespondierender Effekt, wie bei der Ausführungsform gemäß der Figuren 1 bis 4 erzielt wird. Eine Verstellung ist bei dem vorliegenden Polygon um jeweils 60° möglich. Bei einer anderen polygonalen Ausgestaltung vergrößert oder verringert sich der Verstellwinkel entsprechend.

Insbesondere bei einer Ausgestaltung des Elastomerelementes 4 als integraler Bestandteil entweder des Spiegelträgers 3 oder des Spiegelfußes 2 wird eine Reduktion der Einzelteile erreicht. Darüber hinaus nimmt das Elastomerelement 4 neben einer Haltefunktion die Funktion einer Schwingungsdämpfung ein, so dass eine Funktionsintegration durch das Bauteil stattfindet, was die Kosten des gesamten Außenspiegels reduziert. Das Elastomerelement 4 wird nur auf Druck belastet und kann als Kunststoff, Schaumstoff oder einem Gummiwerkstoff ausgebildet sein. In dem Ausführungsbeispiel gemäß den Figuren 4 und 5 findet die Festlegung in dem Spiegelträger 3 so statt, dass das Elastomerelement 4 keine Relativbewegung zu dem Spiegelträger 3 ausführt.

## Patentansprüche

1. Verstellbarer Spiegel, insbesondere Außenspiegel, für Kraftfahrzeuge mit einem Gelenk, das einen Spielträger um eine Drehachse klappbar mit einem Spiegelfuß verbindet, **dadurch gekennzeichnet, dass** zwischen dem Spiegelfuß (2) und dem Spiegelträger (3) ein Elastomerelement (4) angeordnet ist, das formschlüssig an dem Spiegelträger (3) und/oder dem Spiegelfuß (2) oder stoffschlüssig an dem Spiegelträger (3) oder dem Spiegelfuß (2) festgelegt ist und den Spiegelträger (3) in einer ersten Stellung hält, und dass an dem Spiegelträger (3) und/oder Spiegelfuß (2) Kompressionselemente (21) angeordnet sind, die bei einer Verlagerung des Spiegelträgers (3) aus der ersten Stellung in eine zweite Stellung das Elastomerelement komprimieren.

2. Spiegel nach Anspruch 1, **dadurch gekennzeichnet, dass** die Kompressionselemente (21) eine radial zu der Drehachse gerichtete Komponente aufweisen.

3. Spiegel nach Anspruch 1 oder 2, **dadurch gekennzeichnet, dass** die Kompressionselemente (21) als Vorsprünge an dem Spiegelfuß (2) und/oder Spiegelträger (3) ausgebildet sind.

4. Spiegel nach einem der voranstehenden Ansprüche, **dadurch gekennzeichnet, dass** der Spiegelfuß (2) und/oder der Spiegelträger (3) einen unrunden oder polygonen Querschnitt aufweisen.

5. Spiegel nach einem der voranstehenden Ansprüche, **dadurch gekennzeichnet, dass** zwischen dem Elastomerelement (4) und dem Spiegelfuß (2) und/oder dem Spiegelträger (3) ein Kopplungselement (5) angeordnet ist.

6. Spiegel nach einem der voranstehenden Ansprüche, **dadurch gekennzeichnet, dass** der Spiegelfuß (2) von dem Elastomerelement (4) umgeben ist und der Querschnitt im Lagerbereich des Elastomerelementes (4) als ein regelmäßiges Vieleck, insbesondere Sechseck, ausgebildet ist.

7. Spiegel nach einem der voranstehenden Ansprüche, **dadurch gekennzeichnet, dass** das Elastomerelement (4) in dem Spiegelträger (3) eingelegt ist.

8. Spiegel nach Anspruch 7, **dadurch gekennzeichnet, dass** der Spiegelträger (3) eine Vielzahnkontur aufweist, in der das Elastomerelement (4) formschlüssig eingelegt ist.

9. Spiegel nach einem der voranstehenden Ansprüche, **dadurch gekennzeichnet, dass** das Elastomerelement (4) an dem Spiegelfuß (2) und/oder Spiegelträger (3) unter Vorspannung festgelegt ist.

10. Spiegel nach einem der voranstehenden Ansprüche, **dadurch gekennzeichnet, dass** das Elastomerelement (4) aus einem elastisch verformbaren Kunststoff oder Gummiwerkstoff hergestellt ist.

11. Spiegel nach einem der voranstehenden Ansprüche, **dadurch gekennzeichnet, dass** das Elastomerelement (4) an dem Spiegelträger (3) oder dem Spiegelfuß (2) angeformt, insbesondere in einem 2K-Spritzgießverfahren in den Spiegelfuß (2) oder den Spiegelträger (3) integriert ist.

## Claims

1. An adjustable mirror, in particular an exterior mirror for motor vehicles, comprising a joint, linking a mirror support pivotable around a rotation axis to a mirror base, wherein between the mirror base (2) and the mirror support (3), an elastomeric element (4) is disposed, which is fixated in a form locked manner at the mirror support (3) and/or at the mirror base (2), or in a materially continuous manner at the mirror support (3), or at the mirror base (2), and holds the mirror support (3) in a first position, and compression elements (21), are disposed at the mirror support (3) and/or at the mirror base (2), compressing the elastomeric element, when the mirror support (3) is moved from a first position into a second position.

2. A mirror according to claim 1, wherein the compression elements (21) comprise a component, radially facing towards the rotation axis.

3. A mirror according to claim 1 or 2, wherein the compression elements (21) are provided as protrusions at the mirror base (2) and/or at the mirror support (3).

4. A mirror according to one of the preceding claims, wherein the mirror base (2) and/or the mirror support (3) comprise a non-circular, or polygonous cross section.

5. A mirror according to one of the preceding claims, wherein between the elastomeric element (4) and the mirror base (2), and/or the mirror support (3) a coupling element (5) is disposed.

6. A mirror according to one of the preceding claims, wherein the mirror base (2) is surrounded by the elastomeric element (4), and the cross section in the support portion of the elastomeric element (4) is provided as a regular polygon, in particular a hexagon.

7. A mirror according to one of the preceding claims, wherein the elastomeric element (4) is inserted into the mirror support (3).

8. A mirror according to claim 7, wherein the mirror support (3) comprises a multi-tooth contour, into which the elastomeric element (4) is inserted in a form locked manner.

9. A mirror according to one of the preceding claims, wherein the elastomeric element (4) is mounted to the mirror base (2), and/or the mirror support (3), under a preload.

10. A mirror according to one of the preceding claims, wherein the elastomeric element (4) is made from an elastically deformable plastic or rubber material.

11. A mirror according to one of the preceding claims, wherein the elastomeric element (4) is molded to the mirror support (3), or to the mirror base (2), in particular integrated into the mirror base (2), or into the mirror support (3) in a two-component injection molding method.

## Revendications

1. Miroir réglable, en particulier un rétroviseur extérieur pour véhicules automobiles, comprenant une articulation reliant un support de rétroviseur, rabattable autour d'un axe de rotation, avec un pied de rétroviseur, **caractérisé en ce qu'**un élément en élastomère (4) est placé entre le pied (2) de rétroviseur et le support (3) de rétroviseur et est fixé par complémentarité de forme au support (3) de rétroviseur et/ou au pied (2) de rétroviseur ou par liaison de matière au support (3) de rétroviseur ou au pied (2) de rétroviseur, et maintient le support (3) de rétroviseur dans une première position, et des éléments de compression (21) sont disposés sur le support (3) de rétroviseur et/ou le pied (2) de rétroviseur, lesquels compriment l'élément en élastomère lors du déplacement du support (3) de rétroviseur d'une première position vers une seconde position.

2. Miroir selon la revendication 1, **caractérisé en ce que** les éléments de compression (21) présentent un constituant orienté radialement par rapport à l'axe de rotation.

3. Miroir selon la revendication 1 ou 2, **caractérisé en ce que** les éléments de compression (21) sont conçus sous forme de parties en saillie sur le pied (2) de rétroviseur et/ou le support (3) de rétroviseur.

4. Miroir selon l'une des revendications précédentes, **caractérisé en ce que** le pied (2) de rétroviseur et/ou le support (3) de rétroviseur présentent une section transversale de forme non circulaire ou de forme polygonale.

5. Miroir selon l'une des revendications précédentes, **caractérisé en ce qu'**un élément de couplage (5) est placé entre l'élément élastomère (4) et le pied (2) de rétroviseur et/ou le support (3) de rétroviseur.

6. Miroir selon l'une des revendications précédentes, **caractérisé en ce que** le pied (2) de rétroviseur est enveloppé par l'élément élastomère (4) et la section transversale dans la zone de palier de l'élément élastomère (4) est conçue sous forme d'un polygone régulier, en particulier un hexagone.

7. Miroir selon l'une des revendications précédentes, **caractérisé en ce que** l'élément élastomère (4) est inséré dans le support (3) de rétroviseur.

8. Miroir selon la revendication 7, **caractérisé en ce que** le support (3) de rétroviseur présente un contour à dents multiples dans lequel est inséré l'élément élastomère (4) par complémentarité de forme.

9. Miroir selon l'une des revendications précédentes, **caractérisé en ce que** l'élément élastomère (4) est fixé sous précontrainte au pied (2) de rétroviseur et/ou au support (3) de rétroviseur.

10. Miroir selon l'une des revendications précédentes, **caractérisé en ce que** l'élément en élastomère (4) est réalisé à partir de matière plastique ou de matériau en caoutchouc élastiquement déformables.

11. Miroir selon l'une des revendications précédentes, **caractérisé en ce que** l'élément élastomère (4) est formé sur le support (3) de rétroviseur ou le pied (2) de rétroviseur, en particulier intégré selon le procédé de moulage par injection à deux composantes dans le pied (2) de rétroviseur ou le support (3) de rétroviseur.
